# EUROPEAN PATENT SPECIFICATION

(11) **EP 1 791 373 B1**
(45) Date of publication and mention of the grant of the patent: **17.09.2008**
(21) Application number: 05257228.6
(22) Date of filing: 23.11.2005
(51) Int. Cl.: H04Q 7/22

(54) **Method for routing SMS messages**
Verfahren zur Leitweglenkung von SMS Nachrichten
Procédé pour le routage de messages SMS

(43) Date of publication of application: 30.05.2007
(60) Divisional application: 07109230.8
(73) Proprietor: Research In Motion Limited, Waterloo, Ontario N2L 3W8 (CA)
(72) Inventor: Harris, Ian, Devizes Wiltshire SN10 2LD (GB)
(74) Representative: Hibbert, Juliet Jane Grace

(56) References cited:
- GB-A- 2 385 241
- US-A- 6 052 591
- US-A- 6 151 507
- US-A1- 2004 198 330
- US-A1- 2005 070 314

## Description

### FIELD OF THE INVENTION

The present invention generally relates to mobile communication, and more specifically to a system and a method for routing a short message originated by a wireless mobile communication device to a relevant local destination based upon characteristics of the short message.

### BACKGROUND OF THE INVENTION

In today's wireless mobile communication systems, a user of a mobile wireless communication device can often communicate by sending a Short Message through the Short Message Service ("SMS"). When the user sends a SMS message, it is usually routed to the user's home network SMS Service Center ("SMS-SC"). For example, if the user's home network were in New York, NY, his SMS messages would be routed to his home network SMS-SC in New York, NY even when he sends an SMS message while is roaming in London, England, and is out of his home network. For most applications, routing SMS messages to the user's home network SMS-SC presents no problem, but there are certain situations, such an SMS message requesting emergency assistance, where it would be preferable for the SMS message to be sent to an SMS-SC in the currently visited network and its content sent on an entity providing local emergency assistance. Presently, to provide local emergency assistance to the user, it would be necessary for a receiving Short Message Entity ("SME") in the user's home network to provide the details of the emergency SMS message to a local SME in the currently visited network where the user requires the emergency assistance. Such mechanisms can be quite complex and costly, and may well introduce delays and ineffective assistance.
US2004/0198330 discloses a method for inputting a call number into a call number memory of a telecommunications terminal. In the method, the call number is entered into the call number memory of the telecommunications terminal by call number information being deseminated in a communications network, and by the terminal recording or updating the call number, which is derived from the received call number information, in the call number memory of the terminal.
According to a first aspect of the invention, there is provided a method in a wireless mobile communication device for directing a short message to an appropriate local destination as claimed in independent claim 1.
According to a second aspect of the invention, there is provided a wireless mobile communication device configured to direct a short message to an appropriate local destination as claimed in independent claim 9.

### BRIEF DESCRIPTION OF THE DRAWINGS

FIG. 1 is an exemplary environment in which a wireless communication system in accordance with at least one of the preferred embodiments may be practiced;
FIG. 2 is an exemplary flowchart illustrating a process of routing a short message originated by a visiting mobile device to a local short message service center in a wireless communication network in accordance with at least one of the preferred embodiments;
FIG. 3 is an exemplary block diagram of a wireless communication network configured to route a short message to a local destination in accordance with at least one of the preferred embodiments;
FIG. 4 is an exemplary flowchart illustrating a process of routing a short message originated by a mobile device to a local short message service center by the mobile device in accordance with at least one of the preferred embodiments; and
FIG. 5 is an exemplary block diagram of a wireless mobile communication device configured to route a short message to a local destination in accordance with at least one of the preferred embodiments.

### SUMMARY

A mobile device receives a list of predefined short message destinations and compares a message destination of a generated message with the list; if a match is found, the message is transmitted to a local destination corresponding to the matching predefined short message destination.

### DETAIL DESCRIPTION OF THE PREFERRED EMBODIMENTS

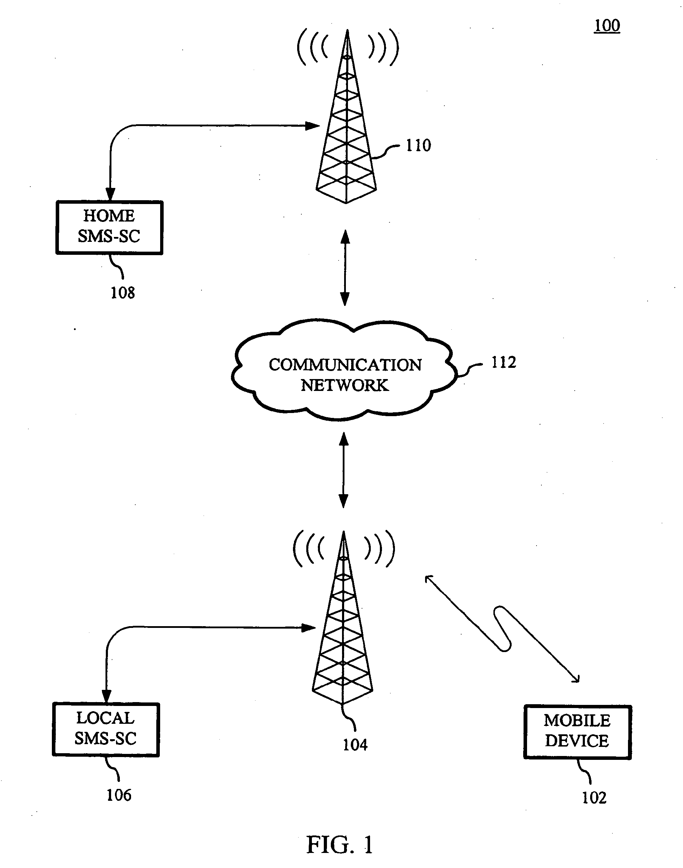

FIG. 1 is an exemplary environment 100 in which a wireless communication system in accordance with at least one of the preferred embodiments may be practiced. In this example, a mobile device 102 is registered in a non-home wireless communication network ("local network") 104, which has a local SMS-SC 106. Normally, an SMS message transmitted by the mobile device 102 will reach its home SMS-SC 108 associated with its home network 110 through the local wireless communication network 104 and a communication network 112 such as a traditional land-line communication network or wide area network 112. However, for a certain type of SMS messages, such as an SMS message requesting emergency assistance, the SMS message transmitted from the mobile device 102 is routed to the local SMS-SC 106 in the local network 104, and the content of the SMS message is sent on an entity providing local emergency assistance.

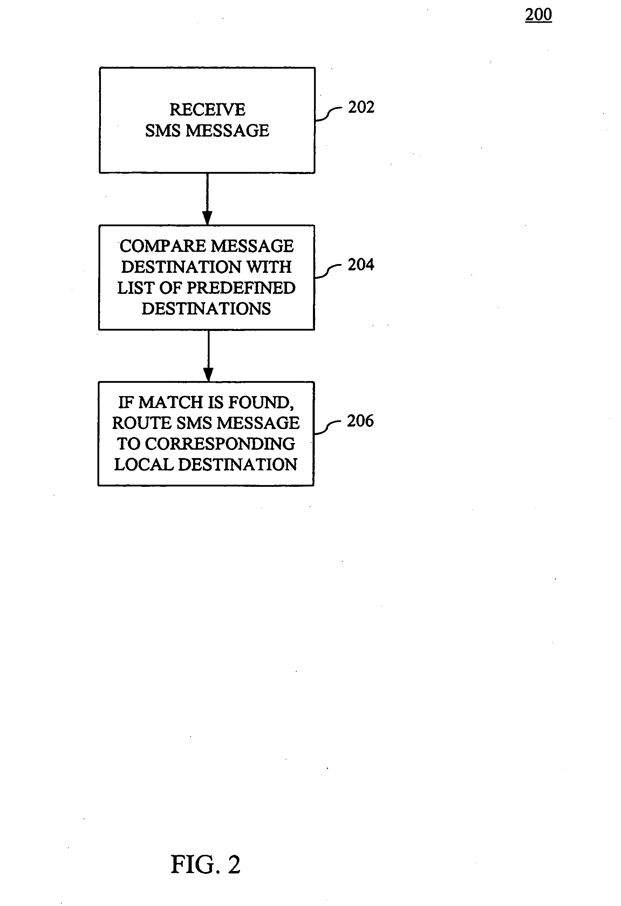

FIG. 2 is an exemplary flowchart 200 illustrating a process of routing a short message originated by a visiting mobile device 102 to local short message service center 106 in the local network 104 in accordance with at least one of the preferred embodiments. In block 202, the local network 104 receives an SMS message having a message destination from the mobile device 102. The message destination is the address of the intended recipient which the user of the mobile device 102 inserts, known as the Transport Protocol Destination Address ("TP-DA"). In the case of an emergency short message this TP-DA will be a short code such as 911, 112, 999, or any predefined code known to indicate that the short message concerns an emergency situation. The local network 104 has a list of predefined short message destinations, which is used to route the SMS message from the mobile device 102 to an appropriate local destination. The predefined short message destinations may be a plurality of emergency center destinations such as, but no limited to police, fire department, hospital, 911, 112, 999, or any other destinations associated with emergency centers. Each emergency center destination may have a corresponding short message destination for a locally located emergency center. Although the mobile device 102 automatically inserts the routing information, i.e. the address of the home SMS-SC, the local network 104 evaluates the TP-DA and routes the short message to an appropriate SC. In block 204, the local network 104 compares the message destination, or TP-DA, with the list of predefined short message destinations. If a match is found in block 204, the local network 104 route the SMS message from the mobile device 102 to a local destination corresponding to the matching predefined short message destination of the list of predefined short message destinations in block 206. The local destination may be a local SMS-SC 106 or a locally located emergency center. The local network 104 may route the SMS message a local destination in various ways including: replacing the original message destination with the local destination and transmitting the short message to the local destination; forwarding the short message to the local destination; and generating a new short message having the local destination, appending the original short message to the new short message, and transmitting the new short message having the appended short message to the local destination.

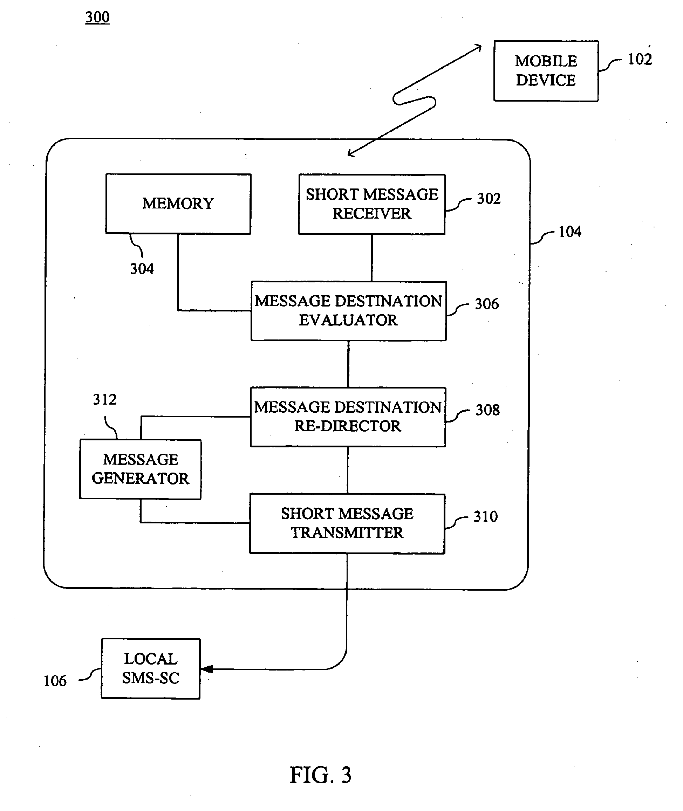

FIG. 3 is an exemplary block diagram 300 of the local network 104 configured to route a short message to a local destination in accordance with at least one of the preferred embodiments. The local network 104 has a short message receiver 302 configured to receive a short message having a message destination from a locally registered mobile device such as the mobile device 102. The local network 104 has a memory device 304, which is configured to store the previously described list of predefined short message destinations. A message destination evaluator 306 is coupled to both the short message receiver 302 and the memory 304, and is configured to match the message destination with a predefined short message destination of the list of predefined short message destinations in the memory 304. A message destination re-director 308 is couple to the message destination evaluator 306, and is configured to re-direct the short message to a local destination corresponding to the matching predefined short message destination of the list of predefined short message destinations. The message destination re-director 308 may be further configured to replace the message destination with the local destination. A short message transmitter 310 is coupled to the message destination re-director 308 and is configured to transmit the short message to the local destination such as the local SMS-SC 106. The short message transmitter 310 may be further configured to forward the short message to the local destination. The local network 104 may also have a message generator 312 coupled to the message destination re-director 308 and the short message transmitter 310, and configured to generate a new short message having the local destination and to append the short message to the new short message.

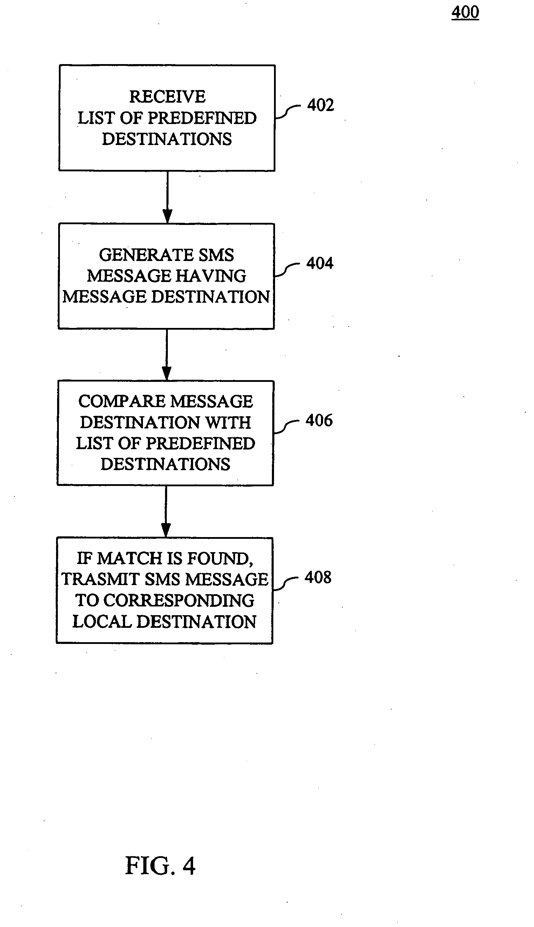

Alternatively, the mobile device 102 may direct the SMS message to an appropriate local destination such as the local SMS-SC 106. FIG. 4 is an exemplary flowchart 400 illustrating a process of routing the SMS message originated by the mobile device 102 to the local SMS-SC 106 by the mobile device 102 in accordance with at least one of the preferred embodiments. In block 402, the mobile device 102 receives the list of predefined short message destinations, which has been described previously. The mobile device 102 may receive the list of predefined short message destinations upon registering in a non-home network of the mobile device 102 such as the local network 104. In block 404, the mobile device 102 generate an SMS message having a message destination, and compares the message destination with the list of predefined short message destinations in block 406. If the message destination matches a predefined short message destination of the list of predefined short message destinations, the mobile device 102 transmits the SMS message to a local destination corresponding to the matching predefined short message destination of the list of predefined short message destinations in block 408. The mobile device 102 may transmit the SMS message to the local destination by replacing the original message destination with the local destination corresponding to the matching predefined short message destination of the local list of predefined local destination.

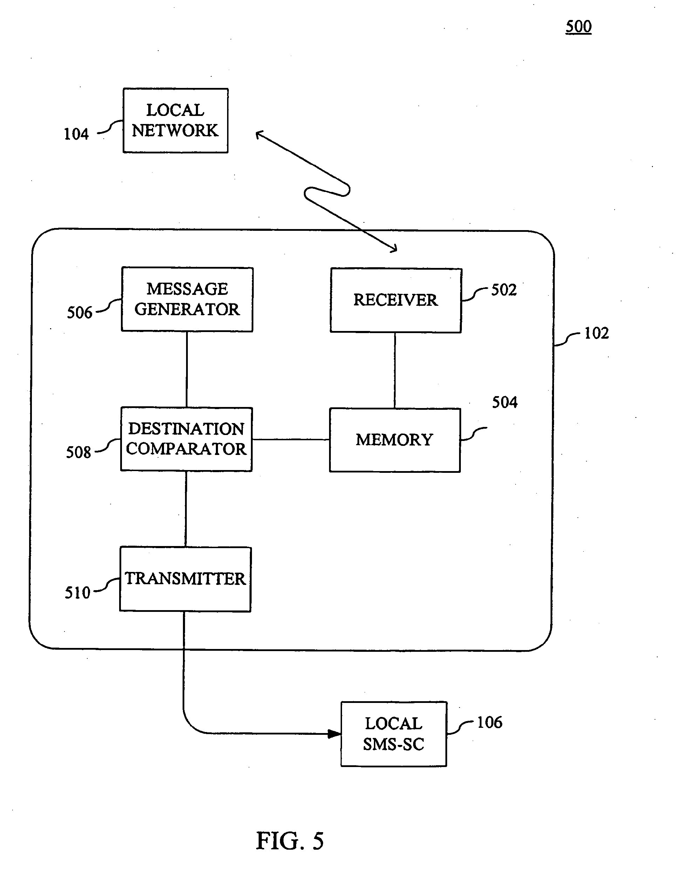

FIG. 5 is an exemplary block diagram 500 of the mobile device 102 configured to route a short message to the local SMS-SC 106 in accordance with at least one of the preferred embodiments. The mobile device 102 has a receiver 502, which is configured to receive the list of predefined short message destinations previously described, from the local network 104, and has a memory device 504 coupled to the receiver 502, which is configured to store the list of predefined short message destinations. The receiver 502 may be configured to receive the list of predefined short message destinations only after the mobile device 102 registers in a non-home network such as the local network 104. The mobile device 102 also has a short message generator 506, which is configured to generate a short message having a message destination. A destination comparator 508 is coupled to the memory device 504 and the short message generator 506, and is configured to match the message destination with a predefined short message destination of the list of predefined short message destinations stored in the memory device 504. A transmitter 510 is coupled to the destination comparator 508, and is configured to transmit the short message to a local destination corresponding to the matching predefined short message destination of the list of predefined short message destinations. The destination comparator 508 may be further configured to replace the message destination with the local destination corresponding to the matching predefined short message destination of the local list of predefined local destination.

While the preferred embodiments of the invention have been illustrated and described, it is to be understood that the invention is not so limited, the scope of the invention being defined by the appended claims.

## Claims

1. A method in a wireless mobile communication device (102) for directing a short message to an appropriate local destination, the method comprising:
receiving, at the wireless mobile communication device (102), a list of predefined short message destinations;
generating a short message having a message destination;
comparing, by the wireless mobile communication device (102), the message destination with the list of predefined short message destinations; and
if the message destination matches a predefined short message destination of the list of predefined short message destinations based on the comparing, transmitting the short message to a local destination corresponding to the matching predefined short message destination.

2. The method of claim 1, wherein receiving a list of predefined short message destinations includes:
receiving a list of predefined short message destinations upon registering in a non-home network (104) of the wireless mobile communication device (102).

3. The method of claim 1, wherein transmitting the short message to a local destination corresponding to the matching predefined short message destination of the local list of predefined local destinations includes:
replacing the message destination with the local destination corresponding to the matching predefined short message destination of the local list of predefined local destinations.

4. The method of claim 1, wherein the local destination corresponding to the matching predefined short message destination of the list of predefined short message destinations includes a local short message service center (106).

5. The method of claim 1, wherein the list of predefined short message destinations includes a plurality of emergency center destinations, each emergency center destination of the plurality of emergency center destinations having a corresponding short message destination for a locally located emergency center.

6. The method of claim 1, wherein the short message is a short message service "SMS" message.

7. The method of claim 1, wherein the message destination is a Transport Protocol Destination Address "TP-DA" of the short message.

8. The method of claim 1, wherein the message destination is a short code of an intended recipient entered by a user of the wireless mobile communication device (102)

9. A wireless mobile communication device (102) configured to direct a short message to an appropriate local destination, the wireless mobile communication device (102) comprising:
a receiver (502) configured to receive a list of predefined short message destinations;
memory (504) coupled to the receiver (502), the memory (504) configured to store the received list of predefined short message destinations;
a short message generator (506) configured to generate a short message having a message destination;
a destination comparator (508) coupled to the memory (504) and the short message generator (506), the destination comparator (508) configured to match the message destination with a predefined short message destination of the list of predefined short message destinations; and
a transmitter (510) coupled to the destination comparator (508), the transmitter (510) configured to transmit the short message to a local destination corresponding to the matching predefmed short message destination.

10. The wireless mobile communication device (102) of claim 9, wherein the receiver (502) is further configured to receive the list of predefined short message destinations after the wireless mobile communication device (102) registers in a non-home network (104) of the wireless mobile communication device (102).

11. The wireless mobile communication device (102) of claim 9, wherein the destination comparator (508) is further configured to replace the message destination with the local destination corresponding to the matching predefined short message destination of the local list of predefined local destination.

12. The wireless mobile communication device (102) of claim 9, wherein the list of predefined short message destinations includes a plurality of emergency center destinations, each emergency center destination of the plurality of emergency center destinations having a corresponding short message destination for a locally located emergency center.

13. The wireless mobile communication device (102) of claim 9, wherein the short message is a short message service "SMS" message.

14. The wireless mobile communication device (102) of claim 9, wherein the message destination is a Transport Protocol Destination Address "TP-DA" of the short message.

15. The wireless mobile communication device (102) of claim 9, wherein the short message generator (506) is configured to generate a short message having a message destination which is a short code entered by a user of the wireless mobile communication device (102).

16. The wireless mobile communication device (102) of claim 9, wherein the short message generator (506) is configured to generate a short message having a message destination entered by a user of the wireless mobile communication device (102).

## Patentansprüche

1. Verfahren in einer drahtlosen mobilen Kommunikationsvorrichtung (102) zum Leiten einer Kurznachricht an ein geeignetes lokales Ziel, wobei das Verfahren aufweist:
Empfangen, an der drahtlosen mobilen Kommunikationsvorrichtung (102), einer Liste von vordefinierten Kurznachrichtenzielen;
Erzeugen einer Kurznachricht mit einem Nachrichtenziel;
Vergleichen, durch die drahtlose mobile Kommunikationsvorrichtung (102), des Nachrichtenziels mit der Liste von vordefinierten Kurznachrichtenzielen; und
wenn das Nachrichtenziel mit einem vordefinierten Kurznachrichtenziel der Liste von vordefinierten Kurznachrichtenzielen übereinstimmt, basierend auf dem Vergleich, Senden der Kurznachricht an ein lokales Ziel, das dem übereinstimmenden vordefinierten Kurznachrichtenziel entspricht.

2. Verfahren gemäß Anspruch 1, wobei ein Empfangen einer Liste von vordefinierten Kurznachrichtenzielen umfasst:
Empfangen einer Liste von vordefinierten Kurznachrichtenzielen bei Registrierung in einem Nicht-Heimat-Netzwerk (104) der drahtlosen mobilen Kommunikationsvorrichtung (102).

3. Verfahren gemäß Anspruch 1, wobei ein Senden der Kurznachricht an ein lokales Ziel, das dem übereinstimmenden vordefinierten Kurznachrichtenziel der lokalen Liste von vordefinierten lokalen Zielen entspricht, umfasst:
Ersetzen des Nachrichtenziels mit dem lokalen Ziel, das dem übereinstimmenden vordefinierten Kurznachrichtenziel der lokalen Liste von vordefinierten lokalen Zielen entspricht.

4. Verfahren gemäß Anspruch 1, wobei das lokale Ziel, das dem übereinstimmenden vordefinierten Kurznachrichtenziel der Liste von vordefinierten Kurznachrichtenzielen entspricht, ein lokales Kurznachrichten-Dienstzentrum (106) umfasst.

5. Verfahren gemäß Anspruch 1, wobei die Liste von vordefinierten Kurznachrichtenzielen eine Vielzahl von Notfallzentrumszielen umfasst, wobei jedes Notfallzentrumsziel der Vielzahl von Notfallzentrumszielen ein entsprechendes Kurznachrichtenziel für ein lokal vorhandenes Notfallzentrum hat.

6. Verfahren gemäß Anspruch 1, wobei die Kurznachricht eine Kurznachrichtendienst-"SMS (Short Message Service)"-Nachricht ist.

7. Verfahren gemäß Anspruch 1, wobei das Nachrichtenziel eine Transportprotokollzieladresse "TP-DA (Transport Protocol Destination Address)" der Kurznachricht ist.

8. Verfahren gemäß Anspruch 1, wobei das Nachrichtenziel ein Kurzcode eines vorgesehenen Empfängers ist, der durch einen Benutzer der drahtlosen mobilen Kommunikationsvorrichtung (102) eingegeben wird.

9. Drahtlose mobile Kommunikationsvorrichtung (102), die konfiguriert ist, eine Kurznachricht an ein geeignetes lokales Ziel zu leiten, wobei die drahtlose mobile Kommunikationsvorrichtung (102) aufweist:
einen Empfänger (502), der konfiguriert ist, eine Liste von vordefinierten Kurznachrichtenzielen zu empfangen;
einen Speicher (504), der mit dem Empfänger (502) verbunden ist, wobei der Speicher (504) konfiguriert ist, die empfangene Liste von vordefinierten Kurznachrichtenzielen zu speichern;
einen Kurznachrichtenerzeuger (506), der konfiguriert ist, eine Kurznachricht mit einem Nachrichtenziel zu erzeugen;
einen Zielvergleicher (508), der mit dem Speicher (504) und dem Kurznachrichtenerzeuger (506) verbunden ist, wobei der Zielvergleicher (508) konfiguriert ist, das Nachrichtenziel mit einem vordefinierten Kurznachrichtenziel der Liste von vordefinierten Kurznachrichtenzielen zu vergleichen; und
einen Sender (510), der mit dem Zielvergleicher (508) verbunden ist, wobei der Sender (510) konfiguriert ist, die Kurznachricht an ein lokales Ziel zu senden, das dem übereinstimmenden vordefinierten Kurznachrichtenziel entspricht.

10. Drahtlose mobile Kommunikationsvorrichtung (102) gemäß Anspruch 9, wobei der Empfänger (502) weiter konfiguriert ist, die Liste von vordefinierten Kurznachrichtenzielen zu empfangen, nachdem sich die drahtlose mobile Kommunikationsvorrichtung (102) in einem Nicht-Heimat-Netzwerk (104) der drahtlosen mobilen Kommunikationsvorrichtung (102) registriert.

11. Drahtlose mobile Kommunikationsvorrichtung (102) gemäß Anspruch 9, wobei der Zielvergleicher (508) weiter konfiguriert ist, das Nachrichtenziel mit dem lokalen Ziel zu ersetzen, das dem übereinstimmenden vordefinierten Kurznachrichtenziel der lokalen Liste von vordefinierten lokalen Zielen entspricht.

12. Drahtlose mobile Kommunikationsvorrichtung (102) gemäß Anspruch 9, wobei die Liste von vordefinierten Kurznachrichtenzielen eine Vielzahl von Notfallzentrumszielen umfasst, wobei jedes Notfallzentrumsziel der Vielzahl von Notfallzentrumszielen ein entsprechendes Kurznachrichtenziel für ein lokal vorhandenes Notfallzentrum hat.

13. Drahtlose mobile Kommunikationsvorrichtung (102) gemäß Anspruch 9, wobei die Kurznachricht eine Kurznachrichtendienst-"SMS (Short Message Service)"-Nachricht ist.

14. Drahtlose mobile Kommunikationsvorrichtung (102) gemäß Anspruch 9, wobei das Nachrichtenziel eine Transportprotokollzieladresse "TP-DA (Transport Protocol Destination Address)" der Kurznachricht ist.

15. Drahtlose mobile Kommunikationsvorrichtung (102) gemäß Anspruch 9, wobei der Kurznachrichtenerzeuger (506) konfiguriert ist, eine Kurznachricht mit einem Nachrichtenziel zu erzeugen, das ein Kurzcode ist, der durch einen Benutzer der drahtlosen mobilen Kommunikationsvorrichtung (102) eingegeben wird.

16. Drahtlose mobile Kommunikationsvorrichtung (102) gemäß Anspruch 9, wobei der Kurznachrichtenerzeuger (506) konfiguriert ist, eine Kurznachricht mit einem Nachrichtenziel zu erzeugen, das durch einen Benutzer der drahtlosen mobilen Kommunikationsvorrichtung (102) eingegeben wird.

## Revendications

1. Sur un dispositif de communication mobile sans fil (102), procédé d'adressage d'un message court vers une destination locale appropriée, le procédé comprenant les étapes consistant à :
recevoir sur le dispositif de communication mobile sans fil (102) une liste de destinations prédéfinies de messages courts ;
produire un message court possédant une destination du message ;
comparer sur le dispositif de communication mobile sans fil (102) la destination du message avec la liste de destinations prédéfinies ; et
si la comparaison indique que la destination du message correspond à une destination prédéfinie de messages courts dans la liste de destinations prédéfinies de messages courts, émettre le message court vers une destination locale correspondant à la destination prédéfinie de messages courts qui correspond.

2. Procédé selon la revendication 1, dans lequel l'étape de réception d'une liste de destinations prédéfinies de messages courts comprend l'étape consistant à :
recevoir une liste de destinations prédéfinies de messages courts après enregistrement sur un réseau autre que de rattachement (104) par le dispositif de communication mobile sans fil (102).

3. Procédé selon la revendication 1, dans lequel l'étape d'émission du message court vers une destination locale correspondant à la destination prédéfinie de messages courts qui correspond dans la liste locale de destinations prédéfinies de messages courts comprend l'étape consistant à :
remplacer la destination du message par la destination locale correspondant à la destination prédéfinie de messages courts qui correspond dans la liste locale de destinations prédéfinies de messages courts.

4. Procédé selon la revendication 1, dans lequel la destination locale correspond à la destination prédéfinie de messages courts qui correspond dans la liste de destinations prédéfinies de messages courts comprend un centre local de service de message courts (106).

5. Procédé selon la revendication 1, dans lequel la liste de destinations prédéfinies de messages courts comprend une pluralité de destinations de centres d'urgence, chaque destination de centre d'urgence, dans la pluralité de destinations de centres d'urgence, comprenant une destination correspondante de messages courts pour un centre d'urgence implanté localement.

6. Procédé selon la revendication 1, dans lequel le message court est un message du service SMS, pour « *Short Message Service* » - Service de messages courts.

7. Procédé selon la revendication 1, dans lequel la destination du message est une adresse de destination d'un protocole de transport, TP-DA, pour « *Transport Protocol Destination Address* », du message court.

8. Procédé selon la revendication 1, dans lequel la destination du message est un code abrégé d'un destinataire voulu, saisi par un utilisateur du dispositif de communication mobile sans fil (102).

9. Dispositif de communication mobile sans fil (102) configuré pour adresser un message court vers une destination locale appropriée, le dispositif de communication mobile sans fil (102) comprenant :
un récepteur (502) configuré pour recevoir une liste de destinations prédéfinies de messages courts ;
une mémoire (504) reliée au récepteur (502), la mémoire (504) étant configurée pour stocker la liste reçue de destinations prédéfinies de messages courts ;
un générateur de messages courts (506) configuré pour produire un message court possédant une destination du message ;
un comparateur de destinations (508), relié à la mémoire (504) et au générateur de messages courts (506), le comparateur de destinations (508) étant configuré pour comparer la destination du message avec une destination prédéfinie de messages courts dans la liste de destinations prédéfinie ; et
un émetteur (510) relié au comparateur de destinations (508), l'émetteur (510) étant configuré pour émettre le message court vers une destination locale correspondant à la destination prédéfinie de messages courts qui correspond.

10. Dispositif de communication mobile sans fil (102) selon la revendication 9, dans lequel le récepteur (502) est en outre configuré pour recevoir la liste de destinations prédéfinies de messages courts après que le dispositif de communication mobile sans fil (102) s'est enregistré sur un réseau autre que de rattachement (104) du dispositif de communication mobile sans fil (102).

11. Dispositif de communication mobile sans fil (102) selon la revendication 9, dans lequel le comparateur de destinations (508) est en outre configuré pour remplacer la destination du message par la destination locale correspondant à la destination prédéfinie de messages courts qui correspond dans la liste locale de destinations prédéfinies de messages courts.

12. Dispositif de communication mobile sans fil (102) selon la revendication 9, dans lequel la liste de destinations prédéfinies de messages courts comprend une pluralité de destinations de centres d'urgence, chaque destination de centre d'urgence, dans la pluralité de destinations de centres d'urgence, comprenant une destination correspondante de messages courts pour un centre d'urgence implanté localement.

13. Dispositif de communication mobile sans fil (102) selon la revendication 9, dans lequel le message court est un message du service SMS, pour « *Short Message Service* » - Service de messages courts.

14. Dispositif de communication mobile sans fil (102) selon la revendication 9, dans lequel la destination du message est une adresse de destination d'un protocole de transport, TP-DA, pour « *Transport Protocol Destination Address* », du message court.

15. Dispositif de communication mobile sans fil (102) selon la revendication 9, dans lequel le générateur de messages courts (506) est configuré pour produire un message court ayant une destination du message qui est un code abrégé, saisi par un utilisateur du dispositif de communication mobile sans fil (102).

16. Dispositif de communication mobile sans fil (102) selon la revendication 9, dans lequel le générateur de messages courts (506) est configuré pour produire un message court ayant une destination du message saisie par un utilisateur du dispositif de communication mobile sans fil (102).
